# EUROPEAN PATENT APPLICATION

(11) **EP 4 435 913 A1**
(43) Date of publication of application: **25.09.2024**
(21) Application number: 23868605.9
(22) Date of filing: 21.09.2023
(51) Int. Cl.: H01M 10/04, H01M 50/403, H01M 50/466

(54) **DAMAGE PREVENTION ELECTRODE ASSEMBLY, DAMAGE PREVENTION ELECTRODE ASSEMBLY MANUFACTURING DEVICE, AND DAMAGE PREVENTION ELECTRODE ASSEMBLY MANUFACTURING METHOD**

(30) Priority: 21.09.2022 KR 20220119641
(71) Applicant: LG Energy Solution, Ltd., Seoul 07335 (KR)
(72) Inventor: JO, Kwang Un, Daejeon 34122 (KR); BAEK, Ju Hwan, Daejeon 34122 (KR); LEE, Seung Bae, Daejeon 34122 (KR); LEE, Jin Soo, Daejeon 34122 (KR)
(74) Representative: Goddar, Heinz J.
(86) International application number: PCT/KR2023/014347
(87) International publication number: WO 2024/063553

(57) **Abstract**

According to one example of the present invention, an electrode assembly manufacturing device may be provided, which comprises: a supply part supplying a packaging separator having a packaging length corresponding to the length of the electrode assembly; a packaging part provided so that the packaging separator supplied from the supply part is divided into a folded region and a reference region where the reference surface of the electrode assembly is adsorbed, and seated, and provided to fold the packaging separator so that the folded region is placed on the opposite side of the electrode assembly facing the reference surface of the electrode assembly; and a sealing part sealing the packaging separator located on the opposite side of the electrode assembly after the packaging separator is folded.

## Description

### Technical Field

The present invention relates to a damage prevention electrode assembly in which the outer surface of the electrode assembly is packaged with a packaging separator, a manufacturing device of the damage prevention electrode assembly, and a manufacturing method of the damage prevention electrode assembly.

### Background Art

Secondary batteries also attract attention as a power source of electric vehicles (EVs), hybrid electric vehicles (HEVs), parallel hybrid electric vehicles (PHEVs), and the like that are proposed as a way to solve air pollution from existing gasoline and diesel vehicles, and the like using fossil fuels, where medium-to-large battery modules electrically connecting a number of battery cells are used due to the need for high power output and large capacity in medium-to-large devices such as automobiles.

However, since it is preferable that the medium-to-large battery modules are manufactured as small and light as possible, rectangular batteries, pouch-type batteries, and the like that can be charged with a high integration degree and are lightweight compared to their capacity are mainly used as battery cells of the medium-to-large battery module.

An electrode assembly is accommodated in a case of the battery cells, which is generally classified according to what structure the electrode assembly having a positive electrode/separator/negative electrode structure has.

Typically, it can be classified into a jelly-roll (winding type) electrode assembly having a structure in which long sheet-type positive and negative electrodes are wound with a separator interposed therebetween, a stack-type (lamination-type) electrode assembly in which multitudes of positive electrodes and negative electrodes cut into units of a predetermined size are sequentially laminated with a separator interposed therebetween, and a stack/folding-type electrode assembly.

The stack/folding-type electrode assemblies disclosed in the present applicant's Korean Laid-Open Patent Publication Nos. 2001-0082058, 2001-0082059, and 2001-0082060 have a full cell, which is a structure in which positive electrode/separator/negative electrode are sequentially laminated, as a unit cell, and are manufactured by repeatedly winding a long separator sheet by a unit length in a state where a plurality of full cells is disposed on the long separator sheet.

In the case of such a stack/folding-type electrode assembly, the outer shell of all full cells is surrounded by the separator sheet, so that the relative positions between the respective layers constituting the structure of the electrode assembly are fixed.

In the stack-type electrode assembly, a positive electrode, a separator, and a negative electrode are sequentially laminated. The separator is disposed between the positive electrode and the negative electrode, and prevents an electrical short circuit due to physical contact between the positive electrode and the negative electrode.

In the case of such a stack-type electrode assembly, in general, the separator is manufactured to have wider horizontal and vertical widths than the electrodes, and the stack-type electrode assembly is manufactured by repeatedly performing a step of laminating the separator on a magazine or jig having a width corresponding to the horizontal or vertical width of the separator, and laminating an electrode thereon.

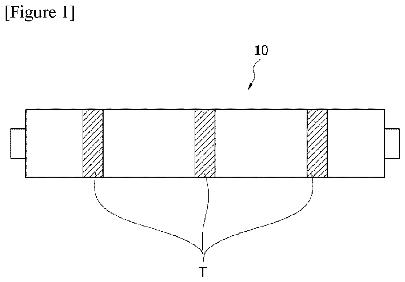

Unlike the stack/folding-type electrode assembly, the relative position between the electrode and the separator is not fixed, so that the side of the electrode assembly is taped using a tape to fix the relative positions between the respective layers. As shown in Figure 1, conventionally, the tapes (T) surround the stack-type electrode assembly (10) in a band shape.

When manufacturing a pouch-type secondary battery, the stack-type electrode assembly (10) is finished with a tape (T) and then transferred to a next process. The tape (T) is for fixing the stack-type electrode assembly (10), not for protecting the stack-type electrode assembly (10), so that during transferring and post-processing of the stack-type electrode assembly (10), there is a possibility that a portion where the stack-type electrode assembly (10) is exposed to the outside is damaged.

### Disclosure

### Technical Problem

The present invention is intended to solve problems with conventional electrode assemblies.

Through one example of the present invention, it is intended to provide a damage prevention electrode assembly capable of preventing inflow of foreign substances into the electrode assembly and separator damage of the electrode assembly as the outer surface of the electrode assembly is packed with a packaging separator, a manufacturing device of the damage prevention electrode assembly, and a manufacturing method of the damage prevention electrode assembly.

Through one example of the present invention, it is intended to provide a device and method capable of easily packaging the outer surface of an electrode assembly with a packaging separator.

### Technical Solution

According to one example of the present invention, an electrode assembly manufacturing device may be provided, which comprises: a supply part supplying a packaging separator having a packaging length corresponding to the length of the electrode assembly; a packaging part provided so that the packaging separator supplied from the supply part is divided into a folded region and a reference region where the reference surface of the electrode assembly is adsorbed, and seated, and provided to fold the packaging separator so that the folded region is placed on the opposite surface of the electrode assembly facing the reference surface of the electrode assembly; and a sealing part sealing the packaging separator located on the opposite surface of the electrode assembly after the packaging separator is folded.

It is preferable that the folded region of the packaging separator is a region covering the lateral sides and the opposite surface of the electrode assembly as the packaging separator is folded.

It is preferable that adsorption to the region covering the lateral sides of the electrode assembly among the folded region is excluded.

It is preferable that the adsorption of the folded region is maintained until the folding of the packaging separator is completed.

The packaging part may comprise an adsorption bed provided with a reference adsorption surface adsorbing the reference region of the separator; an adsorption member provided with a folded adsorption surface adsorbing the folded region of the separator at a predetermined distance from the adsorption bed; and a vacuum pressure application part providing the reference adsorption surface and the folded adsorption surface with a vacuum pressure.

The adsorption bed may be of a fixed configuration and the adsorption member may be of a moving configuration. That is, the adsorption member may be provided to move between the unfolded position and the folded position.

It is preferable that the folded adsorption surface is provided so that it is located on the same plane as the reference adsorption surface at the unfolded position, and is raised and rotated at the folded position to face the reference adsorption surface at the top of the reference adsorption surface.

The adsorption member may comprise a first adsorption member and a second adsorption member provided on both sides of the adsorption bed, respectively.

It is preferable that the first adsorption member and the second adsorption member are provided symmetrically to each other and provided to move symmetrically to each other. Of course, it is preferable that the folding directions are opposite to each other.

The folding of the packaging separator through the first adsorption member and the folding of the packaging separator through the second adsorption member may be performed sequentially.

Both ends of the packaging separator may overlap on the opposite surface of the electrode assembly by folding the packaging separator through the first adsorption member and the second adsorption member.

The folding of the packaging separator through the first adsorption member and the folding of the packaging separator through the second adsorption member may be performed simultaneously.

Both ends of the packaging separator may be spaced apart from each other on the opposite surface of the electrode assembly by folding the packaging separator through the first adsorption member and the second adsorption member.

It may comprise an operating shaft connected to the adsorption member and provided so that the adsorption member is raised and rotated at a predetermined angle.

It may comprise a motor providing the operating shaft with a driving force.

The packaging part may comprise a first packaging part wrapping, including a first lateral side of the electrode assembly, a portion of an opposite surface bent toward the top of the first lateral side, and a portion of a reference surface bent toward the bottom of the first lateral side with a first packaging separator; and a second packaging part wrapping, including a second lateral side of the electrode assembly opposite to the first lateral side, a portion of the opposite surface bent toward the top of the second lateral side, and a portion of the reference surface bent toward the bottom of the second lateral side with a second packaging separator.

It is preferable that the packaging separator adsorbed and seated by the first packaging part and the packaging separator adsorbed and seated by the second packaging part are separated from each other and supplied through the supply part.

The sealing part may comprise a lower sealing part sealing the packaging separator located on the opposite surface of the electrode assembly after the packaging separator is folded.

The first packaging part and the second packaging part may be provided symmetrically with each other based on the lower sealing part, and may be provided to move symmetrically with each other. Of course, the folded directions may be opposite.

It is preferable that both ends of the packaging separator are spaced apart from each other on the opposite surface of the electrode assembly by folding the packaging separator through the first packaging part and the second packaging part.

It is preferable that the folding of the packaging separator through the first packaging part and the folding of the packaging separator through the second packaging part are performed simultaneously.

### Advantageous Effects

Through one example of the present invention, a damage prevention electrode assembly in which the outer surface of the electrode assembly is packaged with a packaging separator is manufactured, whereby it is possible to prevent damage to the separator constituting the electrode assembly, and it is possible to prevent inflow of foreign substances into the electrode assembly.

Through one example of the present invention, the damage prevention electrode assembly wraps the outer surface of the electrode assembly excluding the tab with a packaging separator, whereby it is possible to prevent damage to the separator constituting the electrode assembly, and, in addition to this, it is possible to prevent inflow of foreign substances into the electrode assembly.

### Description of Drawings

Figure 1 schematically shows a front view of an electrode assembly.
Figure 2 schematically shows a configuration diagram of a manufacturing device of a damage prevention electrode assembly according to a first example of the present invention.
Figure 3 is a diagram for explaining a process in which a separator is supplied from a supply part to a packaging part in a first example of the present invention.
Figure 4 shows an electrode assembly seated on a packaging part in a first example of the present invention.
Figure 5 schematically shows a perspective diagram of a packaging part according to a first example of the present invention.
Figures 6 and 7 schematically show operating states of a packaging part according to a first example of the present invention.
Figure 8 schematically shows an operating state of a sealing part in a first example of the present invention.
Figure 9 is diagrams for explaining a damage prevention electrode assembly manufactured according to a first example of the present invention.
Figures 10 and 11 schematically show operating states of a packaging part according to a second example of the present invention.
Figure 12 schematically shows an operating state of a sealing part in a second example of the present invention.
Figure 13 is diagrams for explaining a damage prevention electrode assembly manufactured according to a second example of the present invention.

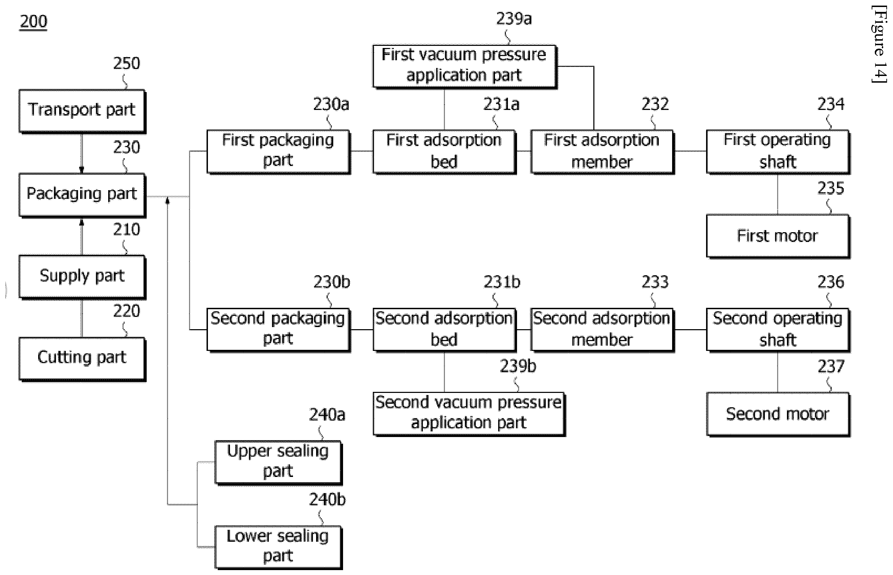

Figure 14 schematically shows a configuration diagram of a manufacturing device of a damage prevention electrode assembly according to a third example of the present invention.
Figures 15 and 16 schematically show operating states of a packaging part according to a third example of the present invention.
Figure 17 schematically shows an operating state of a sealing part in a third example of the present invention.
Figure 18 is diagrams for explaining a damage prevention electrode assembly manufactured according to a third example of the present invention.

### Best Mode

Hereinafter, with reference to the accompanying drawings, a manufacturing device of a damage prevention electrode assembly, a manufacturing method of a damage prevention electrode assembly, and a damage prevention electrode assembly according to a preferred example of the present invention will be described.

However, the attached drawings are illustrative, and the scopes of the manufacturing device of the damage prevention electrode assembly, the manufacturing method of the damage prevention electrode assembly, and the damage prevention electrode assembly of the present application are not limited by the attached drawings.

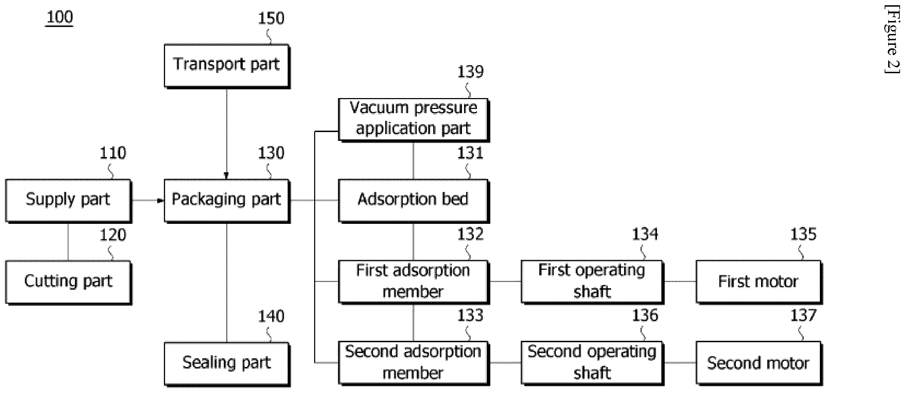

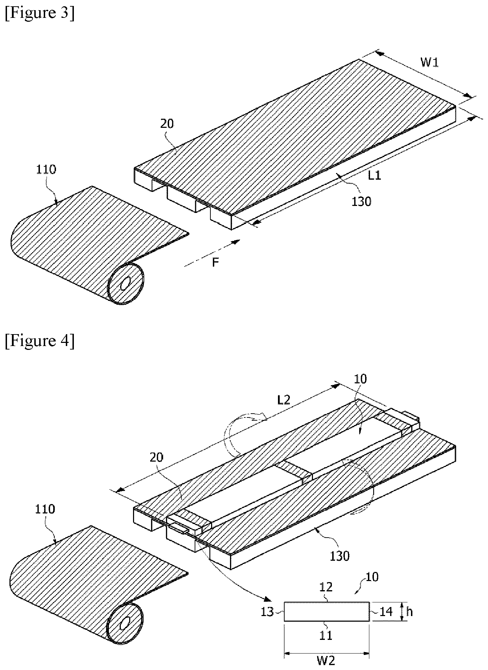

As shown in Figures 2 to 5, the manufacturing device (100) of a damage prevention electrode assembly according to a preferred example of the present invention may comprise a supply part (110), a packaging part (130), and a sealing part (140). This example may comprise a cutting part (120), and may comprise a transport part (150).

The supply part (110) supplies a packaging separator (20).

The packaging separator (20) may be provided so that the width (W1) of the packaging separator (20) is larger than the circumference of the electrode assembly (10). The packaging separator (20) preferably has a packaging length (L1) corresponding to the length (L2) of the electrode assembly.

The circumference of the electrode assembly (10) is the sum of the width (W2) of the reference surface (11), the height (h) of the first lateral side (13), the width (W2) of the opposite surface (12), and the height (h) of the second lateral side (14) of the electrode assembly (10).

Here, the reference surface (11) of the electrode assembly (10) refers to one surface of the electrode assembly (10) placed on a reference adsorption surface (131a) of the packaging part (130) to be described below. The opposite surface (12) of the electrode assembly (10) refers to a surface spaced apart from the reference surface (11) in parallel.

Then, the first lateral side (13) of the electrode assembly (10) is a surface connecting the reference surface (11) and the opposite surface (12), which has the length (L2) of the electrode assembly. The second lateral side (14) of the electrode assembly (10) is spaced apart from the first lateral side (13) in parallel, which refers to a surface connecting the reference surface (11) and the opposite surface (12).

The packaging part (130) is a device packaging the electrode assembly (10) with a packaging separator (20). In this example, the packaging part (130) may wrap the outer surface of the electrode assembly (10) as one end of the packaging separator (20) overlaps the other end of the packaging separator (20).

The packaging separator supplied through the supply part (110) may be divided into a reference region and a folded region. Of course, this division may be division according to the position where the packaging separator is seated on the packaging part (130), and may be division according to the region fixed and the region moved for packaging.

The packaging part (130) may divide and adsorb different regions of one surface of the packaging separator (20), thereby operating so that the packaging separator (20) surrounds the outer surface of the electrode assembly (10). The packaging separator (20) may be divided or distributed into a reference region (A0), a first folded region (A1), and a second folded region (A2).

The reference region (A0) and the folded regions (A1, A2), which are distributed, may be divided into each other, thereby being adsorbed, and seated on the packaging part (130).

The reference region (A0) is a region in contact with the reference surface (11) of the electrode assembly (10). The first folded region (A1) may be said to be a region to extend to one side of the reference region (A0) for one end of the packaging separator (20) to be contained. The second folded region (A2) may be said to be a region to extend to the other side of the reference region (A0) for the other end of the packaging separator (20) to be contained.

The packaging part (130) performs the folding so that the folded regions (A1, A2) are placed on the opposite surface of the electrode assembly facing the reference surface.

Specifically, the packaging part (130) may comprise an adsorption bed (131), a first adsorption member (132), a first operating shaft (134), a second adsorption member (133), a second operating shaft (136), and a vacuum pressure application part (139). The vacuum pressure application part (139) may provide the reference adsorption surface (131a), the first folded adsorption surface (132a), and the second folded adsorption surface (133a) with a vacuum pressure (P). Through vacuum adsorption, the packaging separator may be fixed in close contact with the adsorption bed and the adsorption member. That is, with the adsorptive fixation, the packaging separator is not separated even during the folding process.

The first operating shaft (134) and the second operating shaft (136) may be said to be a configuration in which the first adsorption member (132) and the second adsorption member (133) are moved for folding. A first motor (135) and a second motor (137) may be provided to generate the driving force.

The first operating shaft (134) may be connected to the first adsorption member (132), thereby being provided so that the first adsorption member (132) rises and rotates. Likewise, the second operating shaft (136) may be connected to the second adsorption member (133), thereby being provided so that the second adsorption member (133) rises and rotates.

The adsorption bed (131) is provided with a reference adsorption surface (131a). The reference adsorption surface (131a) is a surface to which a vacuum pressure (P) is applied. A packaging separator (20) is placed on the reference adsorption surface (131a). The electrode assembly (10) is seated on the reference adsorption surface (131a) with the packaging separator (20) interposed therebetween.

Upon the vacuum pressure (P) application, the reference adsorption surface (131a) adsorbs the reference region (A0) of the packaging separator (20) in contact with the reference surface (11) of the electrode assembly (10). As described above, the reference region (A0) is a region in contact with the reference surface (11) of the electrode assembly (10).

The first adsorption member (132) may be provided at a predetermined interval on one side of the adsorption bed (131). The first adsorption member (132) may be coupled to the adsorption bed (131) by the first operating shaft (134). The first operating shaft (134) may be provided between the adsorption bed (131) and the first adsorption member (132).

Here, the predetermined interval between the first adsorption member (132) and the adsorption bed (131) is to cover one lateral side of the electrode assembly after the packaging separator is folded. That is, it is preferable that the packaging separator positioned on the predetermined interval is a portion of the first folded region (A1) or a portion from which adsorption is excluded.

The first operating shaft (134) may be provided so that the first adsorption member (132) rotates and rises at a predetermined angle with respect to the adsorption bed (131). The first motor (135) may be coupled to the first operating shaft (134), thereby providing the driving force to the first operating shaft (134).

The first adsorption member (132) is provided with a first folded adsorption surface (132a) adsorbing the first folded region (A1) in which one end of the packaging separator (20) is included. The first folded adsorption surface (132a) adsorbs the first folded region (A1) of the packaging separator (20) which is not in contact with the reference surface (11) of the electrode assembly (10).

Upon the vacuum pressure (P) application, in the first adsorption member (132), the first folded adsorption surface (132a) adsorbs the first folded region (A1) of the packaging separator (20) on the same plane as the reference adsorption surface (131a).

The first adsorption member (132) rotates and rises in the first direction (R1) in which the first folded adsorption surface (132a) is caused to face the reference adsorption surface (131a), thereby being operated to fold the packaging separator (20) so that the first folded region (A1) is in contact with the opposite surface (12) of the electrode assembly (10). That is, the first adsorption member (132) can move from the unfolded position to the folded position. Of course, if the folding is completed, it can move from the folded position to the unfolded position. That is, it can move to its original position.

Accordingly, in the packaging separator (20), based on the reference region (A0), the first folded region (A1) covers the first lateral side (13) of the electrode assembly (10) and a portion of the opposite surface (12) extending from the first lateral side (13).

When the vacuum pressure (P) is released, the first adsorption member (132) is separated from the packaging separator (20). The first adsorption member (132) rotates and rises in the second direction (R2), which is opposite to the first direction (R1), thereby operating to be unfolded so that the first folded adsorption surface (132a) is positioned on the same plane as the reference adsorption surface (131a).

The second adsorption member (133) is provided on the other side of the adsorption bed (131) to be rotatable at a predetermined angle. That is, the second adsorption member (133) may be positioned symmetrically with the first adsorption member (132), and may also be operated symmetrically.

The second operating shaft (136) is provided so that the second adsorption member (133) rotates and rises at a predetermined angle with respect to the adsorption bed (131), and through this, the second adsorption member (133) moves from the unfolded position to the folded position. The second motor (137) may be coupled to the second operating shaft (136) and provide the second operating shaft (136) with the driving force.

The second adsorption member (133) is provided with a second folded adsorption surface (133a) adsorbing the second folded region (A2) including the other end of the packaging separator (20). The second folded adsorption surface (133a) adsorbs the second folded region (A2) of the packaging separator (20) which is not in contact with the reference surface (11) of the electrode assembly (10).

Upon the vacuum pressure (P) application, in the second adsorption member (133), the second folded adsorption surface (133a) adsorbs the second folded region (A2) of the packaging separator (20) on the same plane as the reference adsorption surface (131a).

The second adsorption member (133) rotates along the second direction (R2) in which the second folded adsorption surface (133a) is caused to face the reference adsorption surface (131a), thereby being operated to fold the packaging separator (20) so that the second folded region (A2) is in contact with the opposite surface (12) of the electrode assembly (10).

Accordingly, in the packaging separator (20), based on the reference region (A0), the second folded region (A2) covers the second lateral side (14) of the electrode assembly (10) and a portion of the opposite surface (12) extending from the second lateral side (14).

When the vacuum pressure (P) is released, the second adsorption member (133) is separated from the packaging separator (20). The second adsorption member (133) is rotated in the first direction (R1), and simultaneously, operated to be unfolded so that the second folded adsorption surface (133a) is positioned on the same plane as the reference adsorption surface (131a).

Meanwhile, the above-described operating shaft configuration and motor configuration are one example for operating the adsorption member between the unfolded position and the folded position, which may be applied to various driving mechanisms.

The sealing part (140) is installed on the top of the electrode assembly (10) placed on the adsorption bed (131). The sealing part (140) operates downward from the top of the electrode assembly (10) to be positioned in contact with the opposite surface (12) of the electrode assembly (10).

The sealing part (140) generates heat at a temperature that the packaging separator (20) is thermally fused with the separator of the electrode assembly (10). The sealing part (140) applies heat to the packaging separator (20) in contact with the separator of the electrode assembly (10), thereby sealing the packaging separator (20) to the electrode assembly (10). The sealing part (140) is operated back to its original position after sealing the packaging separator (20) to the electrode assembly (10).

The sealing part (140) may thermally fuse only the overlapped portion of the packaging separator (20) at the top of the electrode assembly (10). Therefore, even if the packaging separator (20) is not directly thermally fused with the separator of the electrode assembly (10), the packaging separator (20) may be firmly fixed to the electrode assembly (10).

The cutting part (120) may cut the packaging separator (20) unwound from the supply part (110) to the packaging length (L1). The transport part (150) may transport the electrode assembly (10) to the adsorption bed (131) of the packaging part (130).

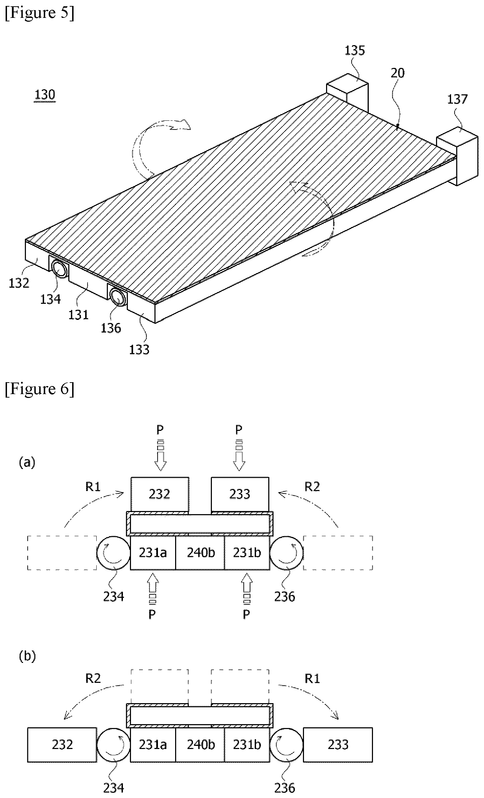

Referring to Figures 6 to 8, the process of packaging the packaging separator (20) on the outer surface of the electrode assembly (10) is described as follows.

Referring to Figure 6(b), the packaging separator (20) may be seated on the reference adsorption surface (131a), the first folded adsorption surface (132a), and the second folded adsorption surface (133a). As described above, the packaging separator (20) may be supplied from the supply part (110) to the packaging part (130).

Referring to Figure 6(c), when the vacuum pressure (P) is applied to the adsorption bed (131), the first adsorption member (132), and the second adsorption member (133), the packaging separator (20) is vacuum-adsorbed on the reference adsorption surface (131a), the first folded adsorption surface (132a), and the second folded adsorption surface (133a).

Referring to Figure 6(d), the electrode assembly (10) is placed on the adsorption bed (131) on which the packaging separator (20) is adsorbed. The reference surface (11) of the electrode assembly (10) is placed on the reference region (A0) of the packaging separator (20).

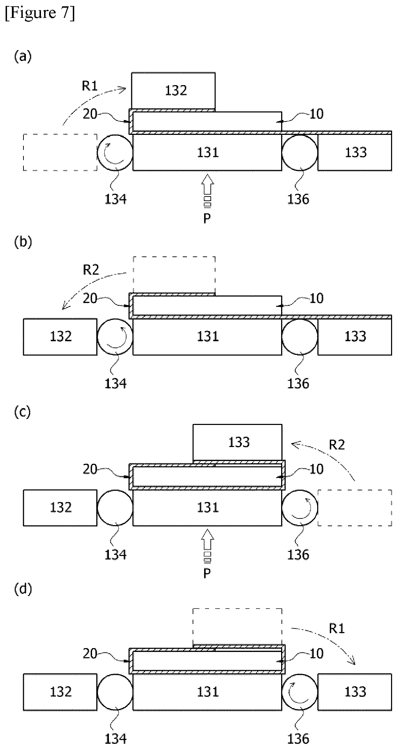

Referring to Figure 7(a), the first adsorption member (132) rises while rotating in the first direction (R1), thereby operating to be folded so that the first folded adsorption surface (132a) is positioned to face the reference adsorption surface (131a). Upon folding operation of the first adsorption member (132), the first folded region (A1) of the packaging separator (20) is in a state adsorbed to the first folded adsorption surface (132a).

Upon folding operation of the first adsorption member (132), in the packaging separator (20), based on the reference region (A0), the first folded region (A1) covers the first lateral side (13) of the electrode assembly (10), and a portion of the opposite surface (12) extending from the first lateral side (13).

When the folding operation of the first folded region (A1) of the packaging separator (20) is completed by the first adsorption member (132), the vacuum pressure applied to the first folded adsorption surface (132a) is released.

As shown in Figure 7(b), the first adsorption member (132) rotates and descends in the second direction (R2), which is a direction opposite to the first direction (R1), and simultaneously operates to be unfolded so that the first folded adsorption surface (132a) is positioned on the same plane as the reference adsorption surface (131a).

If the width (W1) of the packaging separator (20) is larger than the circumference of the electrode assembly (10), the second adsorption member (133) performs folding and unfolding operations after the operation of the first adsorption member (132). After operation of the first adsorption member (132), the second adsorption member (133) performs a folding operation on the second folded region (A2) of the packaging separator (20).

Referring to Figure 7(c), upon vacuum pressure (P) application, in the second adsorption member (133), the second folded adsorption surface (133a) adsorbs the second folded region (A2) of the packaging separator (20) on the same plane as the reference adsorption surface (131a).

The second adsorption member (133) rotates and rises along the second direction (R2) in which the second folded adsorption surface (133a) is caused to face the reference adsorption surface (131a), thereby being operated to fold the packaging separator (20) so that the second folded region (A2) is in contact with the opposite surface (12) of the electrode assembly (10).

Accordingly, in the packaging separator (20), based on the reference region (A0), the second folded region (A2) covers the second lateral side (14) of the electrode assembly (10), and a portion of the opposite surface (12) extending from the second lateral side (14).

The second folded region (A2) of the packaging separator (20) covers a portion of the opposite surface (12) of the electrode assembly (10), and a portion of the first folded region (A1), while the other end (22) of the packaging separator overlaps with one end (21) of the packaging separator.

When the folding operation of the second folded region (A2) of the packaging separator (20) is completed by the second adsorption member (133), the vacuum pressure (P) applied to the second folded adsorption surface (133a) is released.

As shown in Figure 7(d), when the vacuum pressure (P) is released, the second adsorption member (133) is separated from the packaging separator (20). The second adsorption member (133) rotates and descends in the first direction (R1), and simultaneously operates to be unfolded so that the second folded adsorption surface (133a) is positioned on the same plane as the reference adsorption surface (131a).

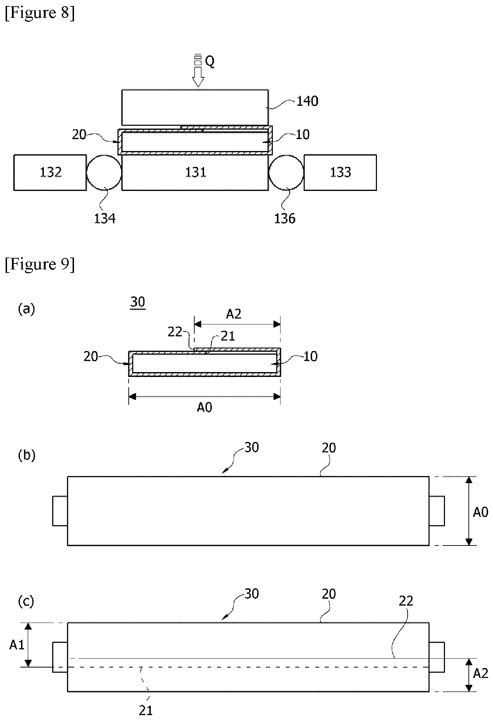

When the folding operation of the packaging part (130) is completed, the sealing part (140) operates. As shown in Figure 8, the sealing part (140) is operated downward from the top of the electrode assembly (10) to be positioned in contact with the opposite surface (12) of the electrode assembly (10). The sealing part (140) generates heat at a temperature that the packaging separator (20) is thermally fused with the separator of the electrode assembly (10).

The sealing part (140) applies heat to the packaging separator (20) in contact with the separator of the electrode assembly (10), thereby sealing the packaging separator (20) to the electrode assembly (10). The sealing part (140) is operated back to its original position after sealing the packaging separator (20) to the electrode assembly (10).

One end (21) of the packaging separator and the other end (22) of the packaging separator are sealed to the electrode assembly (10) by the sealing part (140), whereby the packaging separator (20) entirely warps the outer surface of the electrode assembly (10).

When the width (W1) of the packaging separator (20) is larger than the circumference of the electrode assembly (10), the electrode assembly (10) must be packaged with the packaging separator (20) so that the other end (22) of the packaging separator overlaps with one end (21) of the packaging separator, whereby it is preferable that the second adsorption member (133) operates to be unfolded after the folding operation of the first adsorption member (132) is completed.

When sealing the overlap, very efficient packaging and fixing is possible because the sealing area is small. However, since the operations of the first adsorption member (132) and the second adsorption member (133) must be performed sequentially, the packaging process time may increase. In addition, since packaging is not performed on both sides simultaneously, a separate configuration that the electrode assembly is fixed without movement may be needed when packaging is performed on one side.

Figure 9 shows the damage prevention electrode assembly (30) manufactured by such a process. Referring to Figure 9(a), the outer surface of the damage prevention electrode assembly (30) is surrounded by the packaging separator (20).

Figure 9(b) is a rear view looking at the reference surface (11) of the electrode assembly. Referring to Figure 9(b), the reference region (A0) of the packaging separator (20) surrounds the entire reference surface (11) of the electrode assembly.

Figure 9(c) is a front view looking at the opposite surface (12) of the electrode assembly (10). Referring to Figure 9(c), the first folded region (A1) of the packaging separator (20) covers a partial region of the opposite surface (12) of the electrode assembly (10). The second folded region (A2) of the packaging separator (20) overlaps with a portion of the first folded region (A1), and simultaneously covers the remaining region of the opposite surface (12) of the electrode assembly (10).

In the damage prevention electrode assembly (30), the outer surface of the electrode assembly (10) excluding the tab is packaged with the packaging separator (20), whereby it is possible to prevent damage to the separator constituting the electrode assembly (10), and in addition to this, it is possible to prevent inflow of foreign substances into the electrode assembly (10).

### Mode for Invention

The above-described example can be said to be about a packaging device and a packaging method by folding the packaging separator on both sides based on the reference surface of the electrode assembly to form an overlap on the opposite surface of the electrode assembly.

Meanwhile, the overlap of the packaging separator can be excluded. That is, the overlap can be excluded on the opposite surface of the electrode assembly, and the overlap can be excluded on the opposite surface and the reference surface.

Hereinafter, the examples in which the overlap is excluded will be described. Since the characteristics of fixation and folding of the packaging separator by adsorption are the same or similar, descriptions of overlapping matters may be omitted.

Unlike the above-described example, the manufacturing device (100) of a damage prevention electrode assembly according to the second example of the present invention may have a difference that the overlap is not formed on the opposite surface of the electrode assembly.

The manufacturing device (100) according to this example may similarly comprise a supply part (110), a packaging part (130), and a sealing part (140), and may further comprise a cutting part (120) and a transport part (150).

The constitutions of the manufacturing device (100) of the damage prevention electrode assembly according to this example are the same as the components of the first example as described above. In this example, to avoid repetition of explanation, descriptions of the supply part (110), the cutting part (120), the transport part (150), and the sealing part (140) will be omitted.

In comparison with the above-described first example, the present example will describe the operating method of the packaging part (130) in the case where the width (W1') of the packaging separator (20') is equal to or smaller than the circumference of the electrode assembly (10). The respective components of the packaging part (130) are the same as those of the above-described first example, so that the descriptions thereof will be omitted.

If the width (W1') of the packaging separator is equal to or smaller than the circumference of the electrode assembly (10), the first adsorption member (132) and the second adsorption member (133) simultaneously perform the folding operation.

The first adsorption member (132) rotates and rises in the first direction (R1) based on the adsorption bed (131), and simultaneously operates so that the first folded region (A1) of the packaging separator (20') wraps one side of the electrode assembly (10). The second adsorption member (133) rotates and rises in the second direction (R2) based on the adsorption bed (131), and simultaneously operates so that the second folded region (A2) of the packaging separator (20') wraps the other side of the electrode assembly (10).

After the folding operation is completed, the first adsorption member (132) and the second adsorption member (133) may simultaneously operate to be unfolded. The first adsorption member (132) rotates and descends in the second direction (R2) based on the adsorption bed (131), and simultaneously operates to be unfolded so that the first folded adsorption surface (132a) is placed on the same plane as the reference adsorption surface (131a). The second adsorption member (133) rotates and descends in the first direction (R1) based on the adsorption bed (131), and simultaneously operates to be unfolded so that the second folded adsorption surface (133a) is placed on the same plane as the reference adsorption surface (131a).

In this example, for convenience of explanation, the process of packaging the electrode assembly (10) using the packaging separator (20'), where the width (W1') of the packaging separator is smaller than the circumference of the electrode assembly (10), will be described.

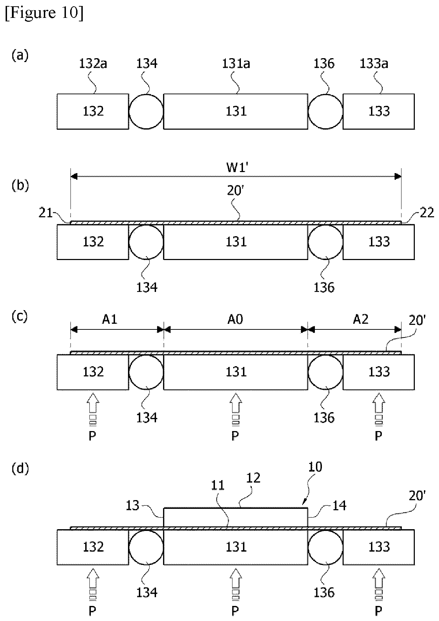

As shown in Figure 10(b), the packaging separator (20') is seated on the reference adsorption surface (131a), the first folded adsorption surface (132a), and the second folded adsorption surface (133a).

As shown in Figure 10(c), when the vacuum pressure (P) is applied to the adsorption bed (131), the first adsorption member (132), and the second adsorption member (133), the packaging separator (20') is vacuum-adsorbed on the reference adsorption surface (131a), the first folded adsorption surface (132a), and the second folded adsorption surface (133a).

Referring to Figure 10(d), the electrode assembly (10) is seated on the adsorption bed (131). The electrode assembly (10) is placed on the packaging separator (20').

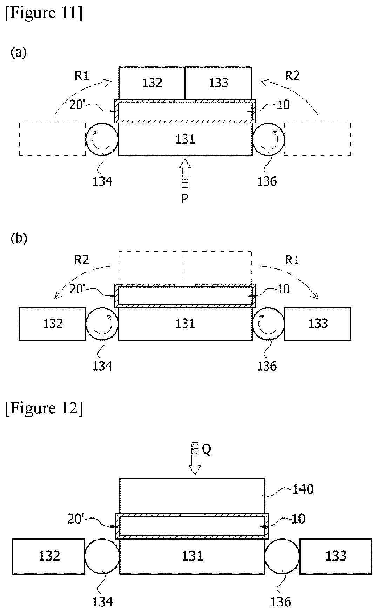

Referring to Figure 11(a), the first adsorption member (132) and the second adsorption member (133) operate so that the first folded region (A1) and the second folded region (A2) of the packaging separator (20') contact the opposite surface (12) of the electrode assembly (10), while simultaneously operating to be folded.

The first adsorption member (132) rotates and rises in the first direction (R1) in a state where the first folded region (A1) of the packaging separator (20') is adsorbed to the first folded adsorption surface (132a). Accordingly, the first folded region (A1) of the packaging separator (20') is in contact with the opposite surface (12) of the electrode assembly (10).

The second adsorption member (133) rotates and rises in the second direction (R2) in a state where the second folded region (A2) of the packaging separator (20') is adsorbed to the second folded adsorption surface (133a). Accordingly, the second folded region (A2) of the packaging separator (20') is in contact with the opposite surface (12) of the electrode assembly (10).

Referring to Figure 11(b), upon the unfolding operation, the vacuum pressure (P) applied to the first adsorption member (132) and the second adsorption member (133) is released.

The first adsorption member (132) rotates and descends in the second direction (R2), and simultaneously operates to be unfolded so that the first folded adsorption surface (132a) is positioned on the same plane as the reference adsorption surface (131a). Then, the second adsorption member (133) rotates and descends in the first direction (R1), and simultaneously operates to be unfolded so that the second folded adsorption surface (133a) is positioned on the same plane as the reference adsorption surface (131a).

Next, as shown in Figure 12, the sealing part (140) is operated downward toward the opposite surface of the electrode assembly (10) to be in contact with the opposite surface (12) of the electrode assembly (10).

The sealing part (140) is in contact with the packaging separator (20') placed on the opposite surface (12) of the electrode assembly (10) to provide heat to the packaging separator (20'). The sealing part (140) generates heat at a temperature that the packaging separator (20') is thermally fused with the separator of the electrode assembly (10).

The sealing part (140) pressurizes the packaging separator (20') to the opposite surface (12) of the electrode assembly and heats it, thereby sealing the packaging separator (20') to the opposite surface (12) of the electrode assembly.

One end (21) of the packaging separator and the other end (22) of the packaging separator are sealed to the electrode assembly (10) by the sealing part (140), whereby the packaging separator (20') entirely wraps the outer surface of the electrode assembly (10).

If the width (W1') of the packaging separator is equal to or smaller than the circumference of the electrode assembly (10), the other end (22) of the packaging separator does not overlap with one end (21) of the packaging separator, whereby the first adsorption member (132) and the second adsorption member (133) may simultaneously operate to be folded, and then operate to be unfolded. Therefore, the packaging process time can be shortened and a separate configuration fixing the electrode assembly (10) upon the packaging process can be omitted. However, since there is no overlap, the sealing number or the sealing area may increase.

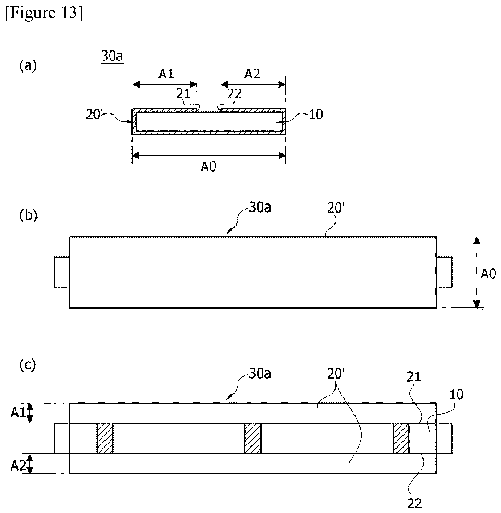

Figure 13 shows the damage prevention electrode assembly (30a) manufactured by such a process. Referring to Figure 13(a), in the damage prevention electrode assembly (30a), the entire reference surface (11) of the electrode assembly and a portion of the opposite surface (12) are wrapped by a packaging separator (20').

Figure 13(b) is a rear view looking at the reference surface (11) of the electrode assembly. Referring to Figure 13(b), the reference region (A0) of the packaging separator (20') surrounds the entire reference surface (11) of the electrode assembly.

Figure 13(c) is a front view looking at the opposite surface (12) of the electrode assembly (10). Referring to Figure 13(c), the first folded region (A1) of the packaging separator (20') covers a partial region of the opposite surface (12) of the electrode assembly (10). The second folded region (A2) of the packaging separator (20') is spaced apart from the first folded region (A1) to cover the remaining region of the opposite surface (12) of the electrode assembly (10).

The damage prevention electrode assembly (30a) surrounds the reference surface (11), the first lateral side (13), the second lateral side, and a portion of the opposite surface (12) of the electrode assembly with a packaging separator (20'), whereby it is possible to prevent the damage of the separator due to folding of the separator on the first lateral side (13) and the second lateral side of the electrode assembly (10).

Hereinafter, unlike the above-described example, an example in which the overlap is not formed on both the reference surface and the opposite surface of the electrode assembly will be described. That is, an example in which sealing is performed on both the reference surface and the opposite surface of the electrode assembly will be described.

The manufacturing device (200) of the damage prevention electrode assembly according to a preferred example of the present invention may comprise a supply part (210), packaging parts (230a, 230b), and sealing parts (240a, 240b). This example may further comprise a cutting part (220) and a transport part (250).

The constitutions of the manufacturing device (200) of the damage prevention electrode assembly according to this example are the same as the components of the first example as described above. In this example, to avoid repetition of explanation, descriptions of the supply part (210), the cutting part (220), and the transport part (250) will be omitted.

In this example, the first packaging separator (20a) and the second packaging separator (20b) are separators having a packaging length (L1) corresponding to the length (L2) of the electrode assembly (10), provided that the sum of the width (W3) of the first packaging separator (20a) and the width (W4) of the second packaging separator (20b) is smaller than the circumference of the electrode assembly (10). That is, the packaging separators in this example can be said to be separate packaging separators rather than a single separator.

The first packaging part (230a) packages one side of the electrode assembly (10) with the first packaging separator (20a) by dividing and adsorbing different regions of one side of the first packaging separator (20a). The first packaging separator (20a) is divided into a first reference region (A11) that is in contact with the reference surface (11) and a first folded region (A12) that is not in contact with the reference surface (11).

In this example, for convenience of explanation, one region of the first packaging separator (20a) in contact with the first reference adsorption surface (231a1) is referred to as a "first reference region (A11)." Then, one region of the first packaging separator (20a) in contact with the first folded adsorption surface (232a) is referred to as a "first folded region (A12)." The first folded region (A12) is a region extending from the first reference region (A11), which is a region including one end (21a) of the first packaging separator.

The first packaging part (230a) is operated so that the first folded region (A12) is folded at a predetermined angle with respect to the first reference region (A11). Accordingly, the first packaging separator (20a) wraps, including the first lateral side (13) of the electrode assembly (10), a portion of the opposite surface (12) bent toward the top of the first lateral side (13), and a portion of the reference surface (11) bent toward the bottom of the first lateral side (13).

The first packaging part (230a) comprises a first adsorption bed (231a), a first adsorption member (232), a first operating shaft (234), a first motor (235), and a first vacuum pressure application part (239a). The first vacuum pressure application part (239a) applies a vacuum pressure (P) to the first reference adsorption surface (231a1) and the first folded adsorption surface (232a).

The first adsorption bed (231a) is provided with the first reference adsorption surface (231a1). When the vacuum pressure is applied to the first reference adsorption surface (231a1), the first reference region (A11) of the first packaging separator (20a) is adsorbed to the first reference adsorption surface (231a1). The electrode assembly (10) is placed on the first adsorption bed (231a) and the second adsorption bed (231b).

The first adsorption member (232) is provided with the first folded adsorption surface (232a) adsorbing the first folded region (A12). The first adsorption member (232) may be provided to be rotatable and movable up and down at a predetermined angle with respect to the first adsorption bed (231a) by the first operating shaft (234).

The first operating shaft (234) rotates and raises the first adsorption member (232) at a predetermined angle based on the first adsorption bed (231a) between the first adsorption bed (231a) and the first adsorption member (232). The first motor (235) may be coupled to the first operating shaft (234).

The first motor (235) rotates and raises the first operating shaft (234) in the first direction (R1) upon the folding operation of the first adsorption member (232). The first motor (235) rotates and raises the first operating shaft (234) in the second direction (R2) upon the unfolding operation of the first adsorption member (232).

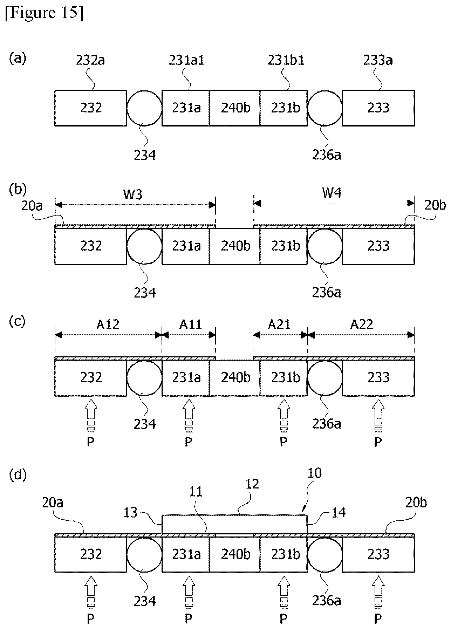

As shown in Figure 15(c), in the first adsorption member (232), the first folded adsorption surface (232a) divides and adsorbs one surface of the first packaging separator (20a) on the same plane as the first reference adsorption surface (231a1).

The first adsorption member (232) rotates and rises in the first direction (R1) by the first operating shaft (234), and simultaneously operates to be folded with respect to the first adsorption bed (231a). Then, the first adsorption member (232) rotates and descends in the second direction (R2) by the first operating shaft (234), and simultaneously operates to be unfolded with respect to the first adsorption bed (231a).

As shown in Figure 15(d), in the first reference region (A11), one side of the first packaging separator (20a) is in contact with the first reference adsorption surface (231a1) of the first adsorption bed (231a), and the other side of the first packaging separator (20a) is in contact with the reference surface (11) of the electrode assembly.

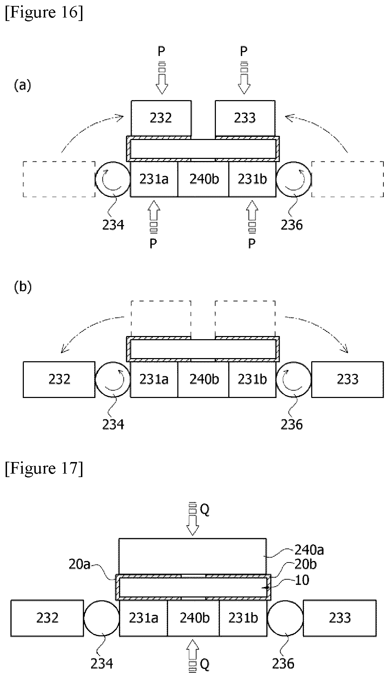

When the electrode assembly (10) is seated on the first adsorption bed (231a) with the first packaging separator (20a) interposed therebetween (see Figure 15(d)), as shown in Figure 16(a), the first adsorption member (232) performs a folding operation in which the first folded adsorption surface (232a) is rotated in the first direction (R1) toward the opposite surface (12) of the electrode assembly.

Upon the folding operation, the first adsorption member (232) is operated so that the first folded adsorption surface (232a) faces the first reference adsorption surface (231a1) with the electrode assembly (10) interposed therebetween.

When the first folded adsorption surface (232a) is positioned to face the first reference adsorption surface (23 1a1), the first folded region (A12) of the first packaging separator (20a) adsorbed on the first folded adsorption surface (232a) covers the first lateral side (13) of the electrode assembly (10) and a portion of the opposite surface (12) extending from the first lateral side (13).

Subsequently, as shown in Figure 16(b), the first adsorption member (232) performs an unfolding operation in which it rotates and descends in the second direction (R2) opposite to the first direction (R1).

Upon the unfolding operation, the vacuum pressure (P) applied to the first adsorption member (232) is released, whereby the first adsorption member (232) is separated from the first packaging separator (20a), and thus is operated so that the first folded adsorption surface (232a) is placed on the same plane as the first reference adsorption surface (231a1).

The second packaging part (230b) is operated to wrap, including the second lateral side (14) of the electrode assembly (10), a portion of the opposite surface (12) bent toward the top of the second lateral side (14), and a portion of the reference surface (11) bent toward the bottom of the second lateral side (14) with the second packaging separator (20b). The second lateral side (14) is opposite to the first lateral side (13).

The second packaging part (230b) may comprise a second adsorption bed (231b), a second adsorption member (233), a second operating shaft (236), and a second motor (237). That is, the second packaging part may be provided symmetrically with the first packaging part, and may be provided to operate symmetrically.

The second adsorption bed (231b) is provided with the second reference adsorption surface (231b1). The second adsorption bed (231b) supports the reference surface (11) of the electrode assembly with the second packaging separator (20b) interposed therebetween. The second adsorption member (233) is provided with the second folded adsorption surface (233a).

In this example, for convenience of explanation, one region of the second packaging separator (20b) in contact with the second reference adsorption surface (231b1) is referred to as a "second reference region (A21)." Then, one region of the second packaging separator (20b) in contact with the second folded adsorption surface (233a) is referred to as a "second folded region (A22)." The second folded region (A22) is a region extending from the second reference region (A21), which is a region including one end (21b) of the second packaging separator.

As shown in Figure 15(c), in the second adsorption member (233), the second folded adsorption surface (233a) divides and adsorbs one surface of the second packaging separator (20b) on the same plane as the second reference adsorption surface (231b1). The second adsorption member (233) may be provided to rotate and move up and down at a predetermined angle with respect to the second adsorption bed (231b) by the second operating shaft (236).

The second adsorption member (233) rotates and rises in the second direction (R2) by the second operating shaft (236), and simultaneously operates to be folded with respect to the second adsorption bed (231b). Then, the second adsorption member (233) rotates and descends in the first direction (R1) by the second operating shaft (236), and simultaneously operates to be unfolded with respect to the second adsorption bed (231b).

The second operating shaft (236) is coupled to one side of the second adsorption bed (231b) and the second adsorption member (233) to rotate and raise the second adsorption member (233) at a predetermined angle based on the second adsorption bed (231b). The second motor (237) is coupled to the second operating shaft (236).

The second motor (237) rotates and elevates the second operating shaft (236) in the second direction (R2) upon the folding operation of the second adsorption member (233). The second motor (237) rotates and descends the second operating shaft (236) in the first direction (R1) upon the unfolding operation of the second adsorption member (233).

As shown in Figure 15(d), in the second reference region (A21), one side of the second packaging separator (20b) is in contact with the second reference adsorption surface (231b1) of the second adsorption bed (231b), and the other side of the second packaging separator (20b) is in contact with the reference surface (11) of the electrode assembly.

When the electrode assembly (10) is seated on the second adsorption bed (231b) with the second packaging separator (20b) interposed therebetween (see Figure 15(d)), as shown in Figure 16(a), the second adsorption member (233) performs a folding operation in which the second folded adsorption surface (233a) is rotated in the second direction (R2) toward the opposite surface (12) of the electrode assembly. Upon the folding operation, the second adsorption member (233) is operated so that the second folded adsorption surface (233a) faces the second reference adsorption surface (231b1) with the electrode assembly (10) interposed therebetween.

When the second folded adsorption surface (233a) is positioned to face the second reference adsorption surface (231b1) with the electrode assembly (10) interposed therebetween, the second folded region (A22) of the second packaging separator (20b) adsorbed on the second folded adsorption surface (233a) covers the second lateral side (14) of the electrode assembly (10) and a portion of the opposite surface (12) extending from the second lateral side (14).

Subsequently, as shown in Figure 16(b), the second adsorption member (233) performs an unfolding operation in which it is rotated in the first direction (R1). Upon the unfolding operation, the vacuum pressure (P) applied to the second adsorption member (233) is released, whereby the second adsorption member (233) is separated from the second packaging separator (20b), and thus is operated so that the second folded adsorption surface (233a) is placed on the same plane as the second reference adsorption surface (231b1).

As shown in Figure 17, the upper sealing part (240a) is in contact with the opposite surface (12) of the electrode assembly with the first packaging separator (20a) and the second packaging separator (20b) interposed therebetween, thereby providing the first packaging separator (20a) and the second packaging separator (20b) with heat. Then, the lower sealing part (240b) is in contact with the reference surface (11) of the electrode assembly with the first packaging separator (20a) and the second packaging separator (20b) interposed therebetween, thereby providing the first packaging separator (20a) and the second packaging separator (20b) with heat.

The upper sealing part (240a) and the lower sealing part (240b) generate heat at a temperature that the first packaging separator (20a) and the second packaging separator (20b) are thermally fused with the separator of the electrode assembly (10).

Here, the lower sealing part (240b) may be provided between the first packaging part and the second packaging part. The first packaging part and the second packaging part may be symmetrical with respect to the lower sealing part (240b).

The lower sealing part (240b) may be provided to pressurize the electrode assembly simultaneously with the upper sealing part (240a). That is, the lower sealing part (240b) may also be provided to be elevated like the upper sealing part (240a). In this case, it is preferable that the first packaging part and the second packaging part are disposed to be spaced apart sufficiently so that the elevation of the lower sealing part (240b) is not interfered.

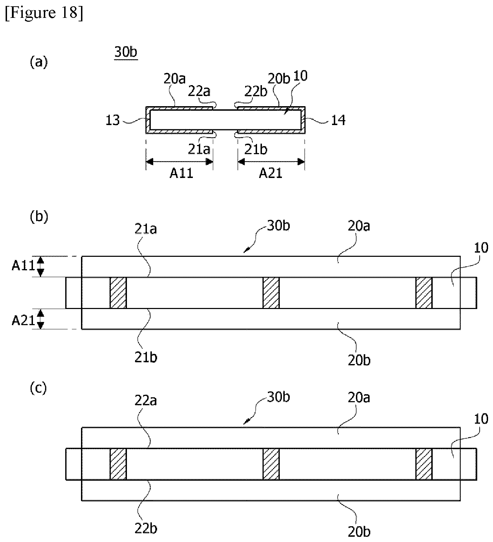

Figure 18 shows the damage prevention electrode assembly (30b) manufactured by such a process. Figure 18(a) is a cross-sectional view of the damage prevention electrode assembly (30b). Figure 18(b) is a rear view looking at the reference surface (11) of the electrode assembly. Figure 18(c) is a front view looking at the opposite surface (12) of the electrode assembly.

In the damage prevention electrode assembly (30b), one side of the electrode assembly (10) including the first lateral side (13) of the electrode assembly (10) is wrapped by the first packaging separator (20a).

The first packaging separator (20a) covers the first lateral side (13) of the first electrode assembly (10), a portion of the reference surface (11) extending to the bottom of the first lateral side (13), and a portion of the opposite surface (12) extending to the top of the first lateral side (13).

One end (21a) of the first packaging separator is in contact with the reference surface (11) of the electrode assembly. The other end (22a) of the first packaging separator is in contact with the opposite surface (12) of the electrode assembly.

In the damage prevention electrode assembly (30b), the other side of the electrode assembly (10) including the second lateral side (14) of the electrode assembly (10) is wrapped by the second packaging separator (20b).

The second packaging separator (20b) covers the second lateral side (14) of the second electrode assembly (10), a portion of the reference surface (11) extending to the bottom of the second lateral side (14), and a portion of the opposite surface (12) extending to the top of the second lateral side (14).

One end (21b) of the second packaging separator is in contact with the reference surface (11) of the electrode assembly. The other end (22b) of the second packaging separator is in contact with the opposite surface (12) of the electrode assembly.

Hereinafter, the present invention will be described in detail through examples. However, the scope of the present invention is not limited by the following examples. The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

It is described in the detailed description of the invention.

## Claims

1. An electrode assembly manufacturing device comprising:
a supply part supplying a packaging separator having a packaging length corresponding to the length of the electrode assembly;
a packaging part provided so that the packaging separator supplied from the supply part is divided into a folded region and a reference region where the reference surface of the electrode assembly is adsorbed, and seated, and provided to fold the packaging separator so that the folded region is placed on the opposite side of the electrode assembly facing the reference surface of the electrode assembly; and
a sealing part sealing the packaging separator located on the opposite side of the electrode assembly after the packaging separator is folded.

2. The electrode assembly manufacturing device according to claim 1, **characterized in that**
the folded region of the packaging separator is a region covering the lateral sides and the opposite surface of the electrode assembly as the packaging separator is folded.

3. The electrode assembly manufacturing device according to claim 2, **characterized in that**
adsorption to the region covering the lateral sides of the electrode assembly among the folded region is excluded.

4. The electrode assembly manufacturing device according to claim 3, **characterized in that**
the adsorption of the folded region is maintained until the folding of the packaging separator is completed.

5. The electrode assembly manufacturing device according to claim 1, **characterized in that**
the packaging part comprises:
an adsorption bed provided with a reference adsorption surface adsorbing the reference region of the separator;
an adsorption member provided with a folded adsorption surface adsorbing the folded region of the separator at a predetermined distance from the adsorption bed; and
a vacuum pressure application part providing the reference adsorption surface and the folded adsorption surface with a vacuum pressure.

6. The electrode assembly manufacturing device according to claim 5, **characterized in that**
the folded adsorption surface is provided so that it is located on the same plane as the reference adsorption surface at the unfolded position, and is raised and rotated at the folded position to face the reference adsorption surface at the top of the reference adsorption surface.

7. The electrode assembly manufacturing device according to claim 6, **characterized in that**
the adsorption member comprises a first adsorption member and a second adsorption member provided on both sides of the adsorption bed, respectively.

8. The electrode assembly manufacturing device according to claim 7, **characterized in that**
the first adsorption member and the second adsorption member are provided symmetrically to each other and provided to move symmetrically to each other.

9. The electrode assembly manufacturing device according to claim 8, **characterized in that**
the folding of the packaging separator through the first adsorption member and the folding of the packaging separator through the second adsorption member are performed sequentially.

10. The electrode assembly manufacturing device according to claim 9, **characterized in that**
both ends of the packaging separator overlap on the opposite surface of the electrode assembly by folding the packaging separator through the first adsorption member and the second adsorption member.

11. The electrode assembly manufacturing device according to claim 8, **characterized in that**
the folding of the packaging separator through the first adsorption member and the folding of the packaging separator through the second adsorption member are performed simultaneously.

12. The electrode assembly manufacturing device according to claim 11, **characterized in that**
both ends of the packaging separator are spaced apart from each other on the opposite surface of the electrode assembly by folding the packaging separator through the first adsorption member and the second adsorption member.

13. The electrode assembly manufacturing device according to claim 5, **characterized by** comprising
an operating shaft connected to the adsorption member and provided so that the adsorption member is raised and rotated at a predetermined angle.

14. The electrode assembly manufacturing device according to claim 13, **characterized by** comprising
a motor providing the operating shaft with a driving force.

15. The electrode assembly manufacturing device according to claim 1, **characterized in that**
the packaging part comprises:
a first packaging part wrapping, including a first lateral side of the electrode assembly, a portion of an opposite surface bent from a top of the first lateral side, and a portion of a reference surface bent from a bottom of the first lateral side with a first packaging separator; and
a second packaging part wrapping, including a second lateral side of the electrode assembly opposite to the first lateral side, a portion of the opposite surface bent from a top of the second lateral side, and a portion of the reference surface bent from a bottom of the second lateral side with a second packaging separator.

16. The electrode assembly manufacturing device according to claim 15, **characterized in that**
the packaging separator adsorbed and seated by the first packaging part and the packaging separator adsorbed and seated by the second packaging part are separated from each other and supplied through the supply part.

17. The electrode assembly manufacturing device according to claim 15, **characterized in that**
the sealing part comprises a lower sealing part sealing the packaging separator located on the opposite surface of the electrode assembly after the packaging separator is folded.

18. The electrode assembly manufacturing device according to claim 17, **characterized in that**
the first packaging part and the second packaging part are provided symmetrically with each other based on the lower sealing part, and are provided to move symmetrically with each other.

19. The electrode assembly manufacturing device according to claim 18, **characterized in that**
both ends of the packaging separator are spaced apart from each other on the opposite surface of the electrode assembly by folding the packaging separator through the first packaging part and the second packaging part.

20. The electrode assembly manufacturing device according to claim 19, **characterized in that**
the folding of the packaging separator through the first packaging part and the folding of the packaging separator through the second packaging part are performed simultaneously.
